# EUROPÄISCHE PATENTSCHRIFT

(11) **EP 0 921 339 B1**
(45) Veröffentlichungstag und Bekanntmachung des Hinweises auf die Patenterteilung: **25.06.2003**
(21) Anmeldenummer: 98203993.5
(22) Anmeldetag: 26.11.1998
(51) Int. Cl.: F16L 3/24, F16L 3/133

(54) **Vorrichtung zum Unterstützen von Gegenständen, mehr insbesondere zum an der Wand befestigen von Rohren.**
Supporting device for objects,in particular for fastening pipes to a wall
Dispositif de support pour objects,notamment pour fixer des tuyaux a un mur

(30) Priorität: 02.12.1997 NL 1007671
(43) Veröffentlichungstag der Anmeldung: 09.06.1999
(73) Patentinhaber: J. van Walraven B.V., 3641 RK Mijdrecht (NL)
(72) Erfinder: Walraven van, Jan, 3641 CP Mijdrecht (NL)
(74) Vertreter: Brookhuis, Hendrik Jan Arnold

(56) Entgegenhaltungen:
- EP-A- 0 620 395
- DE-A- 2 164 991
- DE-A- 2 633 753

## Beschreibung

Die Erfindung bezieht sich auf eine Vorrichtung zum Unterstützen von Gegenständen, mehr insbesondere zum an der Wand Befestigen von Rohren, umfassend ein Wandmontageelement und einen freitragend ab dem Wandmontageelement hervorragenden Stützarm mit einem sich über die Länge des Stützarmes erstreckenden Längsschlitz zum Aufnehmen eines Befestigungselements, wobei der Stützarm ausschließlich aus zwei den langsschlitz begrenzenden, an dem freitragenden Ende des Stützarmes miteinander verbundenen und mit ihrer Hochkante parallelen Schenkeln besteht.

Eine derartige Vorrichtung ist aus der Praxis bekannt. Bei der bekannten Vorrichtung wird der Stützarm von einem Halterungselement mit einem C-förmigen Querschnitt gebildet, wobei der Längsschlitz von zwei, ab den Seitenflächen des Halterungselements nach innen ausgerichteten Flanschen begrenzt wird. Bei dem an einer Wand Befestigen der Vorrichtung kann der Stützarm zum Unterstützen von waagerecht verlaufenden Rohren in solcher Weise orientiert werden, daß der Längsschlitz nach oben oder nach unten zugekehrt ist. In beiden Fällen kann ein in dem Halterungselement angeordnetes Befestigungselement für ein zu unterstützendes Rohr nur nach einer Seite durch den Schlitz hindurch herausragen und deshalb können Rohre, bei einer gewählten Schlitzorientierung mit nach oben oder nach unten gekehrtem Schlitz, an der Oberseite des Stützarmes, beziehungsweise an der Unterseite des Stützarmes unterstützt werden. In der Praxis ist hierfür zwar als Lösung vorgeschlagen, zwei Rücken gegen Rücken aufgestellte Halterungselemente met einem C-förmigen Querschnitt anzuwenden, so daß der Längsschlitz des einen Halterungselements nach unten, und der Längsschlitz des anderen Elements nach oben gekehrt ist. Diese Lösung bringt aber zusätzlichen Herstellungs- und Montagekosten mit sich. Zum Unterstützen von senkrecht verlaufenden Rohren, wobei mit dem Halterungselement eine Vierteldrehung gemacht wird, ist Obenstehendes ebenfalls zutreffend.

Aus DE 2164991 ist eine Vorrichtung bekannt wobei das Wandmontageelement von einer Schiene mit einem C-förmigen Querschnitt gebildet wird. Eine Bügelschelle besteht ausschliesslich aus zwei einer Langsschlitz begrenzenden am freitragenden Ende der Schelle miteinander verbundenen und mit ihrer Hochkante parallelen Schenkeln.

Eine am freitragenden Ende der Schelle angeordnete Spannschraube hält das zu unterstütze Rohr in der Schelle.

Um die Schelle auf der Wandmontageschiene zu montieren, müssen die Schenkeln zusammengepresst werden. In diese Stellung kann die Schelle mit der Seite an der die Schenkeln nicht miteinander verbunden sind, in der Wandmontageschiene gesteckt werden. Wenn der Drück von den Schenkeln weggenommen wird, federn die Schenkeln wieder nach aussen und spannen die Schenkeln sich in die Wandmontageschiene.

Der Erfindung liegt nun die Aufgabe zugrunde, die bekannte Vorrichtung in solcher Weise zu verbessern, daß die obengenannten Nachteile aufgehoben sind.

Erfindungsgemäß wird diese Aufgabe bei einer Vorrichtung der eingangs genannten Gattung dadurch gelöst,
daß die Schenkel an ihrem von dem freitragenden Ende des Stützarmes abgekehrten Ende umgebogen sind, wobei die umgebogenen Enden die Ränder einer in dem Wandmontageelement vorgesehenen Öffnung hintergreifen, und
daß das Wandmontageelement eine Wandmontageplatte umfaßt, deren einer Mittelteil einen trogförmigen Querschnitt aufweist, wobei die Öffnung, durch die die umgebogenen Enden der Schenkel des Stützarmes stecken, um die Ränder der Öffnung zu hintergreifen, vorhanden ist.

Bei der erfindungsgemäßen Vorrichtung ist der Längsschlitz ein durchlaufender Schlitz, so daß unterschiedliche Befestigungselemente gleichzeitig sowohl nach oben, als auch nach unten durch den Schlitz hindurch herausragen können, und dadurch können gleichzeitig Rohre über und unter dem Stützarm unterstützt werden. Außerdem ist die Herstellung des erfindungsgemäßen Stützarmes einfacher und kostengünstiger, und dadurch können die Abmessungen des Stützarmes auf einfache und billige Weise nach Wunsch angepaßt werden.

Die beiden Hauptelemente der Vorrichtung - Wandmontageelement und Stützarm - werden aus Herstellungstechnischen Gründen einzeln angefertigt. Die beiden Elemente können danach auf unterschiedliche Weisen, zum Beispiel mittels eines Schweißens in der Fabrik, miteinander verbunden werden, jedoch vorzugsweise sind die Schenkel des Stützarmes an ihrem von dem freitragenden Ende des Stützarmes abgekehrten Ende umgebogen, wobei die umgebogenen Enden die Ränder einer in dem Wandmontageelement vorgesehenen Öffnung hintergreifen können.

Eine in solcher Weise ausgeführte Vorrichtung hat den Vorteil, daß zunächst die Montageplatte ohne Stützarm an der Wand befestigt werden kann, so daß der Monteur während seiner Arbeit nicht von einem ab dem Wandmontageelement herausragenden Stützarm behindert wird. Anschließend wird ein Stützarm mit gewünschter Länge dadurch an dem Wandmontageelement befestigt, daß die umgebogenen Enden der Schenkel die Ränder einer Öffnung in dem Wandmontageelement hintergreifen. Die beiden Schenkel können dabei mit ihren durch die Öffnung zu steckenden Enden aufeinander zugehend eingedrückt werden, um die umgebogenen Enden durch die Öffnung stecken zu können. Außerdem kann der Stützarm auf einfache Weise von einem anderen, zum Beispiel längeren, Stützarm ersetzt werden, und ist die Menge auf Lager zu haltendes Material viel geringer, weil die Anzahl Wandmontageelemente viel kleiner als die Gesamtzahl von Stützarmen mit unterschiedlichen Längen sein kann.

Das Wandmontageelement umfaßt eine Wandmontageplatte, deren einer Mittelteil einen trogförmigen Querschnitt aufweist, in welchem Mittelteil die Öffnung, durch die die umgebogenen Enden der Schenkel des Stützarmes stecken, um die Ränder der Öffnung zu hintergreifen, vorhanden ist.

In einer weiteren Ausbildung umfaßt die Vorrichtung weiter einen Abstandhalter, der die Schenkel des Stützarmes in Betriebszustand in einem festen Abstand zueinander hält, wodurch der Stützarm in der Öffnung der Wandmontageplatte lösbar festgeklemmt sitzt.

Der Abstandhalter kann hierbei ein Ganzes mit dem Mittelteil der Wandmontageplatte bilden, oder kann ein mit einem Gewinde versehener Bolzen sein, der mit einem Gewindeloch in einem der Schenkel des Stützarmes zusammenwirkt.

Vorzugsweise ist die Öffnung in der Wandmontageplatte eine quadratische Öffnung, deren Seiten eine Abmessung haben, die im wesentlichen der Breite des Stützarmes entspricht.

Mit dem Stützarm kann hierdurch auf einfache Weise eine Vierteldrehung gemacht werden, um als Stützarm für ein senkrecht verlaufendes Rohr zu dienen, ohne mit der Montageplatte eine Vierteldrehung machen zu müssen.

Die Erfindung wird nachstehend anhand der in der Zeichnung dargestellten Ausführungsbeispiele näher erläutert werden.
- Fig. 1: zeigt eine perspektivische Ansicht einer Montageplatte und eines Stützarmes, die zusammen die erfindungsgemäße Vorrichtung in einer ersten Ausführungsform bilden.
- Fig. 2: zeigt eine perspektivische Ansicht der erfindungsgemäßen Vorrichtung in zusammengesetztem Zustand, ab der Seite einer Wand, an der die Vorrichtung befestigt wurde, gesehen.
- Fig. 3: zeigt eine perspektivische Ansicht einer Montageplatte und eines Stützarmes, die zusammen die erfindungsgemäße Vorrichtung in einer zweiten Ausführungsform bilden.
- Fig. 4: zeigt eine perspektivische Ansicht der Vorrichtung gemäß Fig. 3 in zusammengesetztem Zustand, ab der Seite einer Wand, an der die Vorrichtung befestigt wurde, gesehen.
- Fig. 5: zeigt einen Querschnitt durch die an einer Wand befestigte Vorrichtung gemäß Fig. 2 und 4.
- Fig. 6: zeigt in einer perspektivischen Ansicht die erfindungsgemäße Vorrichtung mit einem an dieser mittels eines erfindungsgemäßen Befestigungselements in einer bevorzugten Ausbildung befestigten Rohr.
- Fig. 7: zeigt in einer perspektivischen Ansicht die erfindungsgemäße Vorrichtung mit einem an dieser mittels eines erfindungsgemäßen Befestigungselements in einer anderen Ausführungsform befestigten Rohr.

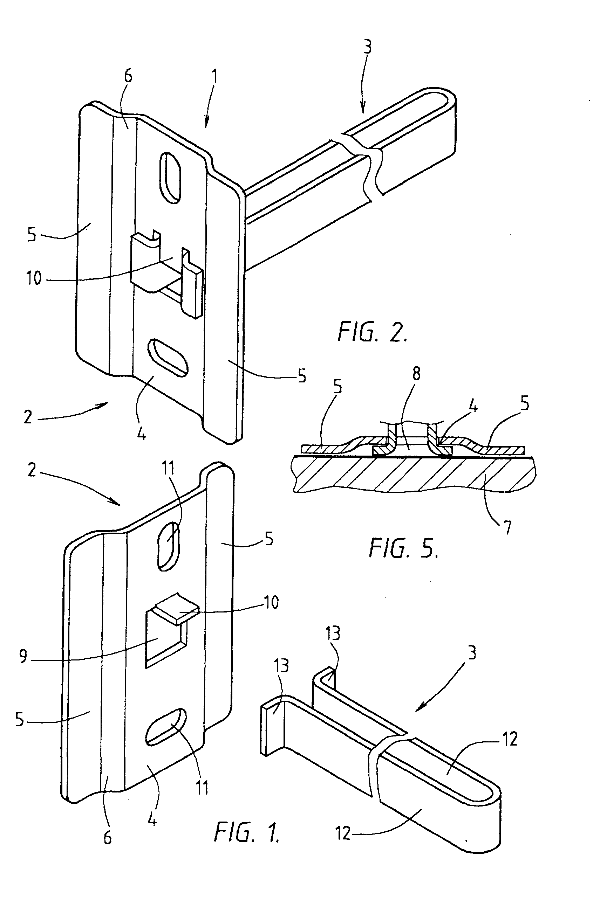

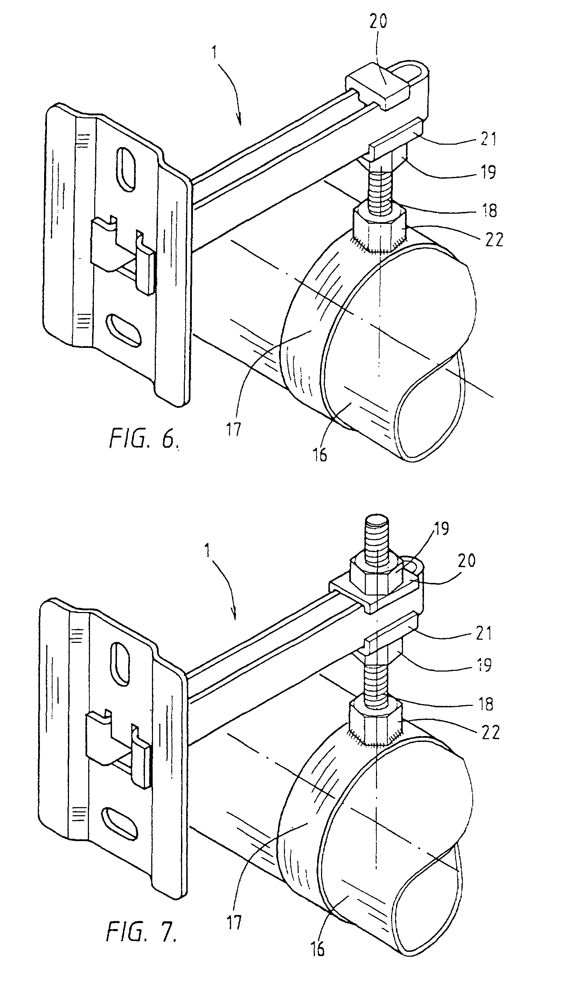

In Fig. 1 sind eine Montageplatte 2 und ein Stützarm 3 dargestellt, die zusammen eine Vorrichtung 1 (sieh Fig. 2) zum an der Wand Befestigen von zum Beispiel Rohrleitungen in einem ersten Ausführungsbeispiel, bilden. Die Montageplatte 2 besteht aus einem zentralen Teil 4 und zwei an beiden Seiten des zentralen Teils liegenden Randteilen 5. Der zentrale Teil 4 ist, in Querschnitt gesehen, mittels dessen an beiden Längsseiten angeordneter, schräg verlaufender Verbindungsteile 6 mit den beiden Randteilen 5 verbunden. In Querschnitt gesehen ist der zentrale Teil 4 der Montageplatte 2 also trogförmig, wodurch bei dem an einer Wand 7 (sieh Fig. 5) Montieren der Montageplatte 2, bei dem die Randteile 5 flach an der Wandoberfläche anliegen, ein Raum 8 (sieh Fig. 5) zwischen der Wand und dem zentralen Teil 4 entsteht.

In dem zentralen Teil 4 der Montageplatte 2 ist eine Öffnung 9 vorgesehen, durch die der Stützarm 3 bei einer Montage gesteckt werden kann. Die Höhenabmessung der Öffnung 9 entspricht im wesentlichen der Höhenabmessung jenes Teils des Stützarmes 3, der durch die Öffnung 9 gesteckt wird, und die Breitenabmessung entspricht im wesentlichen der Breitenabmessung des Stützarmes 3. An der Oberseite der Öffnung 9 ist eine Lasche 10 vorgesehen, die senkrecht zu der Fläche des zentralen Teils steht. Weiter sind in dem zentralen Teil 4 zwei Schlitzlöcher 11 angeordnet, mittels derer die Montageplatte 2 an einer Wand befestigt werden kann.

Der Stützarm 3 besteht aus zwei Schenkeln 12, die an einem Ende miteinander verbunden sind. Die entgegengesetzten Enden 13 der Schenkel 12 sind umgebogen, wobei die umgebogenen Enden 13 auseinander gerichtet sind und einen Winkel von ungefähr 90° mit den Schenkeln 12 bilden. Der Stützarm 3 ist in solcher Weise ausgeführt, daß die beiden Schenkel 12 an ihren freien Enden aufeinander zugehend eingedrückt werden können.

Bei dem an einer Wand Montieren der Vorrichtung 1 wird zunächst die Montageplatte 2 an der Wand befestigt. Der Monteur wird dabei während seiner Arbeit nicht von dem Arm 3, wie im Stand der Technik, behindert. Darauf wird der Stützarm 3 durch die Öffnung 9 gesteckt, wobei der Monteur die Schenkel 13 in solcher Weise aufeinander zugehend eindrückt, daß die umgebogenen Enden 13 die Öffnung 9 passieren können. Anschließend läßt der Monteur den Stützarm 3 los, wodurch die Schenkel 12 sich an die Ränder der Öffnung 9 anlegen und die umgebogenen Enden die Ränder der Öffnung hintergreifen. Danach wird die Lasche 10 zwischen die beiden Schenkel 13 gebogen, wodurch der Stützarm 3 lösbar in der Öffnung 9 der Wandplatte 4 festgeklemmt sitzt, wie in Fig. 2 und Fig. 5 dargestellt.

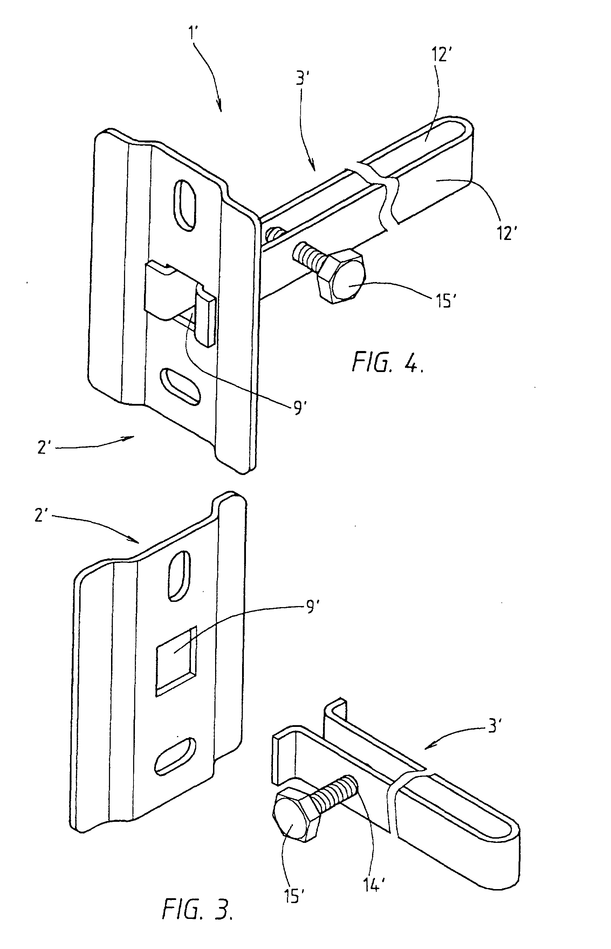

Fig. 3 zeigt eine Montageplatte 2' und einen Stützarm 3', die zusammen eine Vorrichtung 1' (sieh Fig. 4) zum an einer Wand Befestigen von z.B. Rohrleitungen in einem zweiten Ausführungsbeispiel bilden. Die in den Fig. 3 und 4 dargestellte Vorrichtung 1' entspricht im wesentlichen der in Fig. 1 und 2 dargestellten Vorrichtung 1. Die Vorrichtungen 1 und 1' unterscheiden sich durch die Ausführung des Abstandhalters.

In einem der Schenkel des Stützarmes 3' ist ein mit einem Gewinde versehenes Loch 14' vorhanden, in das ein Bolzen 15' geschraubt worden ist. Die Konstruktion des Stützarmes 3' entspricht weiter jener des Stützarmes 3 der Figur 1, und der Stützarm 3 wird hier deshalb nicht weiter im einzelnen beschrieben werden. Die Konstruktion der Montageplatte 2' entspricht im wesentlichen jener der Montageplatte 2 der Figur 1, außer der Tatsache, daß die Montageplatte 2' keine Lasche aufweist, weil in der Ausführungsform gemäß Fig. 3 und 4 der Bolzen 15' als Abstandhalter dient.

Das an einer Wand Montieren der Vorrichtung 1' geschieht in derselben Weise als bei der Vorrichtung 1. Bei der Vorrichtung 1' wird, nachdem der Stützarm 2' durch die Öffnung 9' gesteckt worden ist, und die umgebogenen Enden 13' die Ränder der Öffnung 9' hintergreifen, der Bolzen 15' weiter in das Gewindeloch 14' hineingeschraubt, bis der Bolzen 15' an den gegenüberliegenden Schenkel 12' des Stützarmes 3' angreift. Der Stützarm 3' sitzt dann lösbar in der Öffnung 9' der Wandplatte 4' festgeklemmt, wie in Fig. 4 und Fig. 5 dargestellt. Die Öffnung 9 ist vorzugsweise eine quadratische Öffnung, bei der die Seiten eine Abmessung haben, die der Breite des Stützarmes 3' entspricht, während die umgebogenen Enden der Schenkel 12' eine Höhenabmessung haben, die ebenfalls der Breite des Stützarmes 3' entspricht. Mit dem Stützarm 3' kann auf einfache Weise eine Vierteldrehung gemacht werden, um senkrecht verlaufende Rohre zu unterstützen.

Fig. 6 zeigt eine perspektivische Ansicht der erfindungsgemäßen Vorrichtung 1, bei der eine mittels eines Befestigungselements an dem Stützarm 2 aufgehängte Rohrleitung 16 dargestellt ist. Um das Rohr 16 herum ist eine mit einer Mutter 22 versehene Rohrschelle 17 angeordnet. In der Mutter 22 ist ein Ende einer Gewindestange 18 geschraubt worden. An dem anderen Ende der Gewindestange 18 ist eine Verschlußplatte 20 mit zwei gegenüberliegenden abgewinkelten Rändern fest befestigt. Die Seite mit dem abgewinkelten Rand der Verschlußplatte 20 hat eine Abmessung, die kleiner als der Abstand zwischen den beiden Schenkeln des Stützarmes ist, wodurch die Verschlußplatte 20 von oben oder unten durch den Schlitz hindurch gesteckt werden kann, und mit der anschließend eine Vierteldrehung gemacht werden kann, um die abgewinkelten Ränder die oberen Ränder der beiden Schenkel hintergreifen zu lassen, wodurch die Verschlußplatte 20 sich nicht in Querrichtung bewegen kann. Eine zweite Verschlußplatte 21 mit gegenüberliegenden abgewinkelten Rändern hintergreift die unteren Ränder der beiden Schenkel des Stützarmes. Die Gewindestange 18 ist nicht fest mit der zweiten Verschlußplatte 21 verbunden, sondern steckt durch ein Loch in der Verschlußplatte 21, wodurch die Verschlußplatte 21 entlang der Gewindestange 18 versetzt werden kann und mittels einer Mutter 19 an den unteren Rändern der beiden Schenkel befestigt werden kann. Das aus der Gewindestange 18, den Verschlußplatten 20 und 21 und der Mutter 19 bestehende Befestigungselement kann auf einfache Weise stufenlos in Längsrichtung des Stützarmes versetzt werden, wodurch das Rohr 16 genau im gewünschten Abstand zu der Wand 7 angeordnet werden kann.

Fig. 7 zeigt einer Fig. 6 entsprechende perspektivische Ansicht mit einer anderen Ausführungsform des Befestigungselements. Die oberen Verschlußplatte 20 ist in diesem Ausführungsbeispiel nicht fest mit der Gewundestange 18 verbunden, sondern die Gewindestange ragt durch ein Loch in der Verschlußplatte 20 über die Verschlußplatte heraus. Eine zweite Mutter 19 ist dazu vorgesehen, in Zusammenwirkung mit der ersten Mutter 19 die Verschlußplatten 20 und 21 um die oberen, bzw. unteren Ränder der beiden Schenkel des Stützarmes 3 festzuklemmen. Bei dieser Ausführungsform des aus der Gewindestange 18, den Verschlußplatten 20 und 21 und zwei Muttern 19 bestehenden Befestigungselements kann die Höhe des Rohres 16 variiert werden.

In den Fig. 6 und 7 ist nur eine, von der Vorrichtung 1 unterstützte Rohrleitung dargestellt. In der Praxis können mehrere Rohre nebeneinander an dem Stützarm 3 aufgehängt werden und gleichzeitig auch Rohrleitungen an der Oberseite des Stützarmes 3 von diesem Stützarm 3 unterstützt werden. Außerdem können mit der erfindungsgemäßen Vorrichtung senkrecht verlaufende Rohre dadurch unterstützt werden, daß mit dem Stützarm eine Vierteldrehung gemacht wird, wodurch die Gewindestang 18 in waagerechter Richtung durch den Schlitz hindurch zwischen den beiden Schenkeln 12 des Stützarmes 3 herausragen kann.

Aus dem Obenstehenden wird deutlich sein, daß die erfindungsgemäße Vorrichtung völlig den eingangs erwähnten Zwecken entspricht. Außerdem hat die erfindungsgemäße Vorrichtung eine starke Reduzierung der Herstellungs-Material- und Montagekosten zur Folge.

Weiter wird noch bemerkt, daß die erfindungsgemäße Vorrichtung sich nicht auf das an einer Wand Befestigen von Rohren beschränkt, jedoch auch verwendet werden kann, um andere Gegenstände an einer Wand zu befestigen, und zwar in einem einstellbaren und genauen Abstand zu dieser, wie zum Beispiel Sanitäranlagen.

## Patentansprüche

1. Vorrichtung zum Unterstützen von Gegenständen, insbesondere zum an der Wand Befestigen von Rohren, umfassend ein Wandmontageelement und einen freitragend ab dem Wandmontageelement hervorragenden Stützarm (3) mit einem sich über die Länge des Stützarmes (3) erstreckenden Längsschlitz zum Aufnehmen eines Befestigungselements, wobei der Stützarm (3) ausschließlich aus zwei den Längsschlitz begrenzenden, an dem freitragenden Ende des Stützarmes miteinander verbundenen und mit ihrer Hochkante parallelen Schenkeln (12) besteht, **dadurch gekennzeichnet, daß** die Schenkel (12) an ihrem von dem freitragenden Ende des Stützarmes abgekehrten Ende umgebogen sind, wobei die umgebogenen Enden die Ränder einer in dem Wandmontageelement vorgesehenen Öffnung (9) hintergreifen, und daß das Wandmontageelement eine Wandmontageplatte (2) umfaßt, deren einer Mittelteil einen trogförmigen Querschnitt aufweist, wobei die Öffnung (9), durch die die umgebogenen Enden (13) der Schenkel (12) des Stützarmes (3) stecken, um die Ränder der Öffnung (9) zu hintergreifen, vorhanden ist.

2. Vorrichtung nach Anspruch 1, **dadurch gekennzeichnet, daß** die Vorrichtung weiter einen Abstandhalter umfaßt, der die Schenkel (12) des Stützarmes (3) in Betriebszustand in einem festen Abstand zueinander hält, wodurch der Stützarm (3) in der Öffnung (9) der Wandmontageplatte (2) lösbar festgeklemmt sitzt.

3. Vorrichtung nach Anspruch 2, **dadurch gekennzeichnet, daß** der Abstandhalter einen Teil des Mittelteils (4) der Wandmontageplatte (2) bildet.

4. Vorrichtung nach Anspruch 3, **dadurch gekennzeichnet, daß** der Abstandhalter eine Lasche (10) ist, die mit der Fläche des Mittelteils (4) der Wandmontageplatte (2) im wesentlichen einen lotrechten Winkel bildet, welche Lasche (10) bei einer Montage zwischen den Schenkeln (12) des durch die Öffnung (9) in der Wandmontageplatte (2) gesteckten Stützarmes (3) gebogen werden kann.

5. Vorrichtung nach Anspruch 3, **dadurch gekennzeichnet, daß** der Abstandhalter in solcher Weise ausgeführt ist, daß der feste Abstand zwischen den Schenkeln (12) einstellbar ist.

6. Vorrichtung nach einem der Ansprüche 2 und 5, **dadurch gekennzeichnet, daß** der Abstandhalter ein mit einem Gewinde versehener Bolzen (15') ist, der mit einem Gewindeloch (14') in einem der Schenkel (12) des Stützarmes (3) zusammenwirkt.

7. Vorrichtung nach einem der Ansprüche 1 bis 6, **dadurch gekennzeichnet, daß** die Öffnung (9) in der Wandmontageplatte (2) eine quadratische Öffnung ist, bei der die Seiten eine Abmessing haben, die der Breite des Stützarmes (3) entspricht.

8. Vorrichtung nach einem der Ansprüche 1 bis 7, **dadurch gekennzeichnet, daß** das Befestigungselement eine durch den Längsschlitz zwischen den beiden Schenkeln (12) des Stützarmes (3) zu steckende Gewindestange (18) umfaßt, die mittels zwei oben, bzw. unten an den Schenkeln anliegenden Verschlußplatten (20, 21) und zumindestens einer mit dieser zusammenwirkenden Mutter (19) an dem Stützarm (3) befestigt worden ist.

9. Vorrichtung nach Anspruch 8, **dadurch gekennzeichnet, daß** die obere Verschlußplatte (20) eine Breite hat, die kleiner als der Abstand zwischen den beiden Schenkeln (12) ist, und die obere Verschlußplatte (20) fest an einem Ende der Gewindestange (18) befestigt ist.

10. Vorrichtung nach Anspruch 8 oder 9, **dadurch gekennzeichnet, daß** zumindestens eine der Verschlußplatten (20, 21) zwei gegenüberliegende abgewinkelte Ränder umfaßt, die die oberen, bzw. unteren Ränder der Schenkel (12) des Stützarmes (3) hintergreifen.

## Claims

1. Device for supporting articles, in particular for fastening pipes or tubes on walls, comprising a wall-mounting element and a supporting arm (3) which projects in a self-supporting manner from the wall-mounting element and has a longitudinal slot which extends over the length of the supporting arm (3) and is intended for accommodating a fastening element, the supporting arm (3) exclusively comprising two legs (12) which bound the longitudinal slot, are connected to one another at the self-supporting end of the supporting arm and have their upright sides parallel, **characterized in that** the legs (12) are bent over at their end which is directed away from the self-supporting end of the supporting arm, the bent-over ends engaging behind the edges of an opening (9) provided in the wall-mounting element, and **in that** the wall-mounting element comprises a wall-mounting plate (2), of which a central part has a trough-like cross section, the opening (9), through which the bent-over ends (13) of the legs (12) of the supporting arm (3) are inserted in order to engage behind the edges of the opening (9), being provided in the central part.

2. Device according to claim 1, **characterized in that** the arrangement also comprises a spacer which retains the legs (12) of the supporting arm (3) at a fixed spacing from one another in the operating state, as a result of which the supporting arm (3) is firmly clamped in a releasable manner in the opening (9) of the wall-mounting plate (2).

3. Device according to claim 2, **characterized in that** the spacer forms part of the central part (4) of the wall-mounting plate (2).

4. Device according to claim 3, **characterized in that** the spacer is a lug (10) which essentially forms a right angle with the surface of the central part (4) of the wall-mounting plate (2), which lug (10), during assembly, can be bent between the legs (12) of the supporting arm (3) which is inserted through the opening (9) in the wall-mounting plate (2).

5. Device according to claim 3, **characterized in that** the spacer is configured in such a manner that it is possible to adjust the fixed spacing between the legs (12).

6. Device according to one of claims 2 and 5, **characterized in that** the spacer is a threaded bolt (15') which interacts with a threaded hole (14') in one of the legs (12) of the supporting arm (3).

7. Device according to one of claims 1 to 6, **characterized in that** the opening (9) in the wall-mounting plate (2) is a square opening, with the sides being dimensioned to correspond to the width of the supporting arm (3).

8. Device according to one of claims 1 to 7, **characterized in that** the fastening element comprises a threaded rod (18) which is to be inserted through the longitudinal slot between the two legs (12) of the supporting arm (3) and has been fastened on the supporting arm (3) by means of two closure plates (20, 21), which butt against the top and bottom of the legs, respectively, and at least one nut (19), which interacts with the threaded rod.

9. Device according to claim 8, **characterized in that** the top closure plate (20) has a width which is smaller than the spacing between the two legs (12), and the top closure plate (20) is fixed at one end of the threaded rod (18).

10. Device according to claim 8 or 9, **characterized in that** at least one of the closure plates (20, 21) comprises two opposite, angled edges which engage behind the top and bottom edges, respectively, of the legs (12) of the supporting arm (3).

## Revendications

1. Dispositif de support pour objets, notamment pour fixer des tuyaux à un mur, qui comprend un élément de montage mural et un bras de support (3) faisant saillie hors de l'aplomb de l'élément de montage mural, avec une fente longitudinale s'étendant sur la longueur du bras de support (3) pour recevoir un élément de fixation, de sorte que le bras de support (3) est constitué exclusivement de deux branches (12) aux arêtes supérieures parallèles, qui délimitent la fente longitudinale et sont reliées l'une à l'autre au niveau de l'extrémité en porte-à-faux du bras de support ; **caractérisé en ce que** les branches (12) sont recourbées au niveau de leur extrémité opposée à l'extrémité en porte-à-faux du bras de support, de sorte que les extrémités recourbées saisissent par derrière les bords d'une ouverture (9) prévue dans l'élément de montage mural, et **en ce que** l'élément de montage mural comprend une plaque de montage mural (2) dont un élément central présente une section en forme de cuvette, de sorte que l'on dispose de l'ouverture (9) à travers laquelle passent, pour saisir par derrière les bords de l'ouverture (9), les extrémités recourbées (13) des branches (12) du bras de support (3).

2. Dispositif selon la revendication 1, **caractérisé en ce que** le dispositif comprend également une entretoise qui maintient, en mode de fonctionnement, un écart fixe entre les branches (12) du bras de support (3), le bras de support (3) étant ainsi fixé de manière amovible dans l'ouverture (9) de la plaque de montage mural (2).

3. Dispositif selon la revendication 2, **caractérisé en ce que** l'entretoise constitue une partie de l'élément central (4) de la plaque de montage mural (2).

4. Dispositif selon la revendication 3, **caractérisé en ce que** l'entretoise est une languette (10) qui forme essentiellement un angle perpendiculaire à la surface de l'élément central (4) de la plaque de montage mural (2), ladite languette (10) pouvant être recourbée, lors d'un montage, entre les branches (12) du bras de support (3) passant à travers l'ouverture (9) dans la plaque de montage mural (2).

5. Dispositif selon la revendication 3, **caractérisé en ce que** l'entretoise est réalisée de telle manière que l'écart fixe entre les branches (12) peut être réglé.

6. Dispositif selon l'une des revendications 2 et 5, **caractérisé en ce que** l'entretoise est un boulon (15') muni d'un filetage et agissant conjointement avec un trou taraudé (14') situé dans l'une des branches (12) du bras de support (3).

7. Dispositif selon l'une des revendications 1 à 6, **caractérisé en ce que** l'ouverture (9) dans la plaque de montage mural (2) est une ouverture carrée dans laquelle la dimension des côtés correspond à la largeur du bras de support (3).

8. Dispositif selon l'une des revendications 1 à 7, **caractérisé en ce que** l'élément de fixation comprend une tige filetée (18) à faire passer à travers la fente longitudinale entre les deux branches (12) du bras de support (3), ladite tige étant fixée au niveau du bras de support (3) au moyen de deux plaques de blocage (20, 21) prenant appui au niveau supérieur ou inférieur des branches, et d'au moins un écrou (19) agissant conjointement avec elle.

9. Dispositif selon la revendication 8, **caractérisé en ce que** la largeur de la plaque de blocage supérieure (20) est plus petite que l'écart entre les deux branches (12), et **en ce que** la plaque de blocage supérieure (20) est fixée à demeure au niveau d'une extrémité de la tige filetée (18).

10. Dispositif selon la revendication 8 ou 9, **caractérisé en ce qu'**au moins l'une des plaques de blocage (20, 21) comprend deux bords opposés, incurvés, qui viennent saisir les bords supérieur ou inférieur des branches (12) du bras de support (3).
